# EUROPEAN PATENT SPECIFICATION

(11) **EP 1 724 290 B1**
(45) Date of publication and mention of the grant of the patent: **08.07.2009**
(21) Application number: 05720361.4
(22) Date of filing: 09.03.2005
(51) Int. Cl.: C08F 20/34, C08F 291/00, C08K 5/00, C08L 101/00, C09D 7/12, C09D 201/00, C09J 4/00, C09J 11/06, C09J 201/00, C09K 3/16

(54) **LIQUID COMPOSITION CONTAINING NO SOLVENT**
LÖSUNGSMITTELFREIE FLÜSSIGE ZUSAMMENSETZUNG
COMPOSITION LIQUIDE NE CONTENANT AUCUN SOLVANT

(30) Priority: 11.03.2004 JP 2004069174
(43) Date of publication of application: 22.11.2006
(73) Proprietor: Nisshinbo Industries, Inc., Chuo-ku, Tokyo 103-8650 (JP)
(72) Inventor: MASUDA, Gen, c/o Nisshinbo Industries, Inc., Chiba-shi, Chiba 2670056 (JP); TAKAGI, Kentaro, c/o Nisshinbo Industries, Inc., Chiba-shi, Chiba 2670056 (JP)
(74) Representative: Stuart, Ian Alexander
(86) International application number: PCT/JP2005/004089
(87) International publication number: WO 2005/087822

(56) References cited:
- EP-A1- 0 554 832
- JP-A- 08 143 691
- JP-A- 2001 011 125
- JP-A- 2001 240 629
- JP-A- 2002 129 094
- JP-A- 2004 075 731
- US-A- 4 066 591
- US-A1- 2003 152 547

## Description

### TECHNICAL FIELD

The present invention relates to a solvent-less liquid composition. More specifically, it relates to a solvent-less liquid composition which includes a polymerizable group-bearing ionic liquid as a reactive diluents and uses thereof,

### BACKGROUND ART

Solvent-based adhesives and solvent-based coatings have hitherto been widely used, both industrially and also domestically, in a variety of applications, including packaging and bookbinding, engineering and construction, electrical and electronic devices, automotive materials, and optical components.
Such adhesives and coatings are generally compositions of an adhesive component or a coating component dissolved in an organic solvent, which compositions are typically used by application to the surface to be bonded or coated, followed by removal of the solvent and curing.

However, because such solvent-based adhesives and solvent-based coatings use large amounts of organic solvents, close attention must be given to the safety of the work environment. Such compositions must also be handled with caution from the standpoint of fire prevention and related concerns.
Furthermore, in the building industry, even after the construction work is over, residual organic solvents continue to be slowly released as vapors, which can be harmful to human health. This phenomenon, known as the "sick house syndrome," is a serious problem.
In addition, environmental concerns in recent years have led to restrictions on the release of volatile organic compounds (VOC) into the atmosphere, creating a growing need for products that do not use organic solvents.

Solvent-less adhesives (Patent Document 1: JP-A 9-20878; Patent Document 2: JP-A 10-71664; Patent Document 3: JP-A 11-302621; Patent Document 4: JP-A 2001-164229; Patent Document 5: JP-A 2001-172602; Patent Document 6: JP-A 2001-214144) and solvent-less coatings (Patent Document 7: JP-A 2002-146284; Patent Document 8: JP-A 2002-146285; Patent Document 9: JP-A 2002-322419) which do not use volatile organic solvents have been developed over the past few years so as to overcome such drawbacks of organic solvents.
These solvent-less adhesives and coatings have been created through innovations in the materials serving as the base compound to obtain certain effects, such as lowering the viscosity, and thus enable the intended work to be carried out without the use of organic solvents (e.g., toluene) while yet achieving the basic performance required of the adhesive or coating.

However, with these adhesives and coatings, it is necessary to carry out improvements such as suitable molecular design in accordance with, for example, the material serving as the base compound and the intended purpose of use, thus compromising their versatility. Furthermore, given the difficulty of employing solid resins and very high viscosity resins as the essential ingredients, the materials that can be used are more limited than in the case of solvent-based adhesives and coatings.

Solvent-less coating compositions which are non-volatile at room temperature and which use a reactive diluent that can dissolve the functional group-bearing resin serving as the base compound have also been disclosed (Patent Document 10: JP-A 6-299119). Using this reactive diluent enables resins which, due to an excessively high viscosity or some other reason, had previously been unsuitable for coating applications to be used in coatings. Moreover, because the reactive diluent itself takes part in film formation by reacting with functional groups on the resin, problems such as the evaporation of residual organic solvent do not occur.
Yet, the reaction diluent used in Patent Document 10 leaves something to be desired in its ability to dissolve the resin or inorganic substance serving as the base compound.

Patent Document 1: JP-A 9-20878
Patent Document 2: JP-A 10-71664
Patent Document 3: JP-A 11-302621
Patent Document 4: JP-A 2001-164229
Patent Document 5: JP-A 2001-172602
Patent Document 6: JP-A 2001-214144
Patent Document 7: JP-A 2002-146284
Patent Document 8: JP-A 2002-146285
Patent Document 9: JP-A 2002-322419
Patent Document 10: JP-A 6-299119

### DISCLOSURE OF THE INVENTION

### Problems to be Solved by the Invention

It is therefore an object of the present invention to provide highly versatile solvent-less liquid compositions, solvent-less adhesives, solvent-less coatings and antistatic agents which do not release organic solvent vapors and thus have an excellent safety, and which are able to reduce the burden on the environment.

### Means for Solving the Problems

As a result of extensive investigations, we have discovered that when a solvent-less liquid composition containing as a reactive diluent an ionic liquid on which a polymerizable group has been introduced is used as an adhesive or coating, because the ionic liquid undergoes a polymerization reaction and remains on the adhesive layer or coating film, it is possible to resolve various problems associated with solvent-based adhesives and to obtain compositions having an excellent safety, environmental compatibility and versatility. Moreover, we have found that these polymerizable group-bearing ionic liquids are also suitable as antistatic agents.

Accordingly, the invention provides the following [1] A solvent-less liquid composition, consisting of at least one reactive group-bearing low-molecular-weight organic compound other than a polymerizable group-bearing ionic liquid and/or at least one polymeric compound, and a reactive diluent consisting of at least one polymerizable group-bearing ionic liquid, which has general formula (1) below 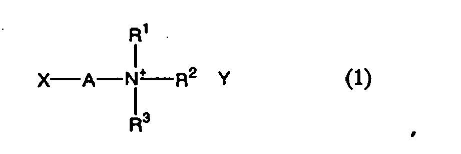 wherein X is a polymerizable functional group; A is a straight-chain or branched-chain hydrocarbon group of 1 to 15 carbons which may include an alkylene oxide unit; R¹ to R³ are each independently an alkyl, alkoxy, aryl or polymerizable group-bearing alkyl of 1 to 10 carbons, and any two moieties from among R¹ to R³ may together form a ring; and Y is a monovalent anion.
The polymerizable group-bearing ionic liquid preferably has the general formula (2) below 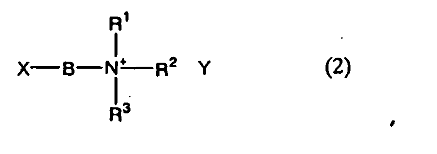 wherein X is a polymerizable functional group; B is a straight-chain hydrocarbon group of 1 to 4 carbons which may include an ethylene oxide unit; R¹ to R³ are each independently an alkyl, alkoxy, aryl or polymerizable group-bearing alkyl of 1 to 10 carbons, and any two moieties from among R¹ to R³ may together form a ring; and Y is a monovalent anion.
The solvent-less liquid composition may be an adhesive composition or a coating composition.
The polymerizable group-bearing ionic liquid may be used as a reactive diluent.
The invention also provides the use as a solvent-less adhesive, solvent-less coating composition, or an antistatic agent of the above a polymerizable group-bearing ionic liquid.

### Effects of the Invention

The solvent-less liquid composition of the present invention, because it includes at least one reactive group-bearing low-molecular-weight organic compound other than a polymerizable group-bearing ionic liquid and/or at least one polymeric compound, and includes a reactive diluent composed of at least one polymerizable group-bearing ionic liquid, has excellent safety and environmental compatibility. That is, not only does the solvent-less liquid composition of the invention not contain the volatile solvents commonly used in solvent-based coatings and adhesives, when such a solvent-less liquid composition is used as an adhesive or a coating, the polymerizable group-bearing ionic liquid remains on the adhesive layer or coating film, and thus is able to substantially prevent the adverse effects of solvent evaporation on human health and the environment.
Moreover, the reactive diluent composed of a polymerizable group-bearing ionic liquid, insofar as it is compatible with many organic compounds and is also capable of dissolving even inorganic compounds which are insoluble or only poorly soluble in organic solvents, can confer various capabilities to the liquid composition.

Because the polymerizable group-bearing ionic liquid used as the reactive diluent is converted into an adhesive or coating film component by the polymerization reaction, following polymerization, there is no need for a drying step to remove solvent. Hence, the overall work involved in adhesive bonding and coating can be simplified, making it possible to achieve, for example, improvements in productivity.
In addition, the polymerizable group-bearing ionic liquid used in the solvent-less liquid composition of the invention is a compound which has within the molecule a cation and an anion, and which functions also as an antistatic agent. Therefore, while the extent will vary depending on the content of the polymerizable group-bearing ionic liquid, the resulting coated or adhesively bonded object or material will have similar antistatic properties. The use, as in the present invention, of a polymerizable group-bearing ionic liquid as a reactive diluent confers excellent antistatic effects because the charge ratio present in the adhesive layer or coating film can be made higher than when a quaternary ammonium salt compound without polymerizable groups is used as the antistatic agent. This antistatic agent is thus a substance which, due to a polymerization reaction, will remain on the adhesive layer or coating film, keeping problems such as exudation from arising.

### BEST MODE FOR CARRYING OUT THE INVENTION

The invention is described more fully below.
The solvent-less liquid composition of the invention is characterized by including at least one reactive group-bearing low-molecular-weight organic compound other than a polymerizable group-bearing ionic liquid and/or at least one polymeric compound, and a reactive diluent composed of at least one polymerizable group-bearing ionic liquid.
Polymerizable group-bearing ionic liquids that may be used as the reactive diluent are not subject to any particular limitation, provided they are ionic liquids on which a polymerizable group has been introduced. The use of at least one selected from among quaternary salt-type ionic liquids of above general formulas (1), (3) and (4) is preferred. Of these, from the standpoint of production costs, it is preferable to use a polymerizable group-bearing ionic liquid of above general formula (1) which has a low raw material cost and is relatively easy to synthesize. The use of a polymerizable group-bearing ionic liquid of formula (2) is especially preferred.
A plurality of polymerizable group-bearing ionic liquids may be used in combination. This makes adjusting the adhesive and coating film components to a viscosity in keeping with the intended purpose of use easy and convenient, and also enables the toughness of the adhesive layer or coating film to be modified.

In the above formulas, the polymerizable functional group X is not subject to any particular limitation, provided it is a group capable of taking part in the polymerization reaction. Illustrative examples include groups having reactive unsaturated bonds, such as α,β-unsaturated carbonyl groups (e.g., (meth)acryl groups), α,β-unsaturated nitrile groups, conjugated dienes and vinyl carboxylate esters; and carboxyl groups, carbonyl groups, epoxy groups, isocyanate groups, hydroxyl groups, amide groups, cyano groups, amino groups, chloromethyl groups, glycidyl ether groups, lithio groups, ester groups, formyl groups, nitrile groups, nitro groups, carbodiimide groups and oxazoline groups. The use of α,β-unsaturated carbonyl groups such as (meth)acryl groups is especially preferred on account of the low cost of the starting materials and because, following polymerization, the product generally exhibits an excellent weather resistance and a high transparency.

The straight-chain or branched-chain divalent hydrocarbon group A of 1 to 15 carbons which may include an alkylene oxide group is exemplified by divalent hydrocarbon groups such as methylene, ethylene, propylene, butylene and pentylene; and groups obtained by the addition thereto of an alkylene oxide such as ethylene oxide, propylene oxide or butylene oxide.
The straight-chain hydrocarbon group B of 1 to 4 carbons that may include an ethylene oxide unit is exemplified by methylene, ethylene, propylene, butylene, and groups obtained by the addition thereto of ethylene oxide.
The number of moles of alkylene (ethylene) oxide addition is preferably from 1 to 7.
The alkyl, alkoxy, aryl or polymerizable group-bearing alkyl groups R¹ to R⁴ of 1 to 10 carbons are exemplified by methyl, ethyl, propyl, isopropyl, butyl, s-butyl, t-butyl, methoxy, ethoxy, propoxy, isopropoxy, s-butoxy, t-butoxy, phenyl, benzyl, and any of these groups in which a hydrogen atom has been substituted with one of the above-mentioned polymerizable groups. Illustrative examples of compounds in which any two moieties from among R¹ to R³ together form a ring include, in formulas (1) and (2), polymerizable group-bearing ionic liquids having, for example, an aziridine ring, an azetidine ring, a pyrrolidine ring or a piperidine ring.

No particular limitation is imposed on the monovalent anion Y, so long as it is capable of forming a polymerizable group-bearing ionic liquid. Use can be made of at least one type of anion selected from among halogen anions, BF₄⁻, PF₆⁻, AsF₆', SbF₆-, AlCl₄', HSO₄⁻, ClO₄-, CF₃SO₃⁻, CH₃SO₃⁻, CF₃SO₄⁻, CH₃SO₄⁻, CF₃CO₂-_{'} CH₃CO₂-_{'} CF₃C₆F₄SO₃-, CF₃C₆H₄SO₃⁻, CH₃C₆H₄SO₃-, (C₂F₅SO₂)₂N⁻, (C₂F₅SO₂) (CF₃SO₂) N⁻ and (CF₃SO₂)₂N⁻.
Of these (C₂F₅SO₂)₂N⁻, (C₂F₅SO₂)(CF₃SO₂)N⁻ and (CF₃SO₂)₂ N⁻ are preferred for greater ease in forming the polymerizable group-bearing ionic liquid, and (CF₃SO₂)₂N⁻ is especially preferred from the standpoint of ready availability and production costs.

Specific examples of the polymerizable group-bearing ionic liquid include compounds of the formulas shown below. These compounds can be obtained by, for example, reacting an alkyl tertiary amine having a polymerizable group with an alkyl halide to effect quaternarization, then carrying out an exchange reaction with the desired anion. Alternatively, by reacting, for example, a tertiary amine with methyl p-tosylate, it is possible to introduce the desired anion concurrent with quaternarization.

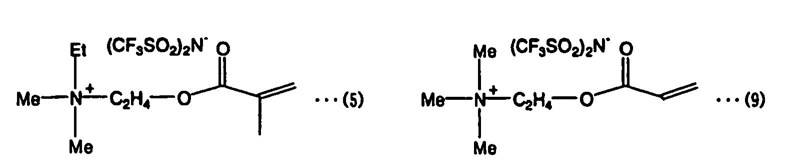

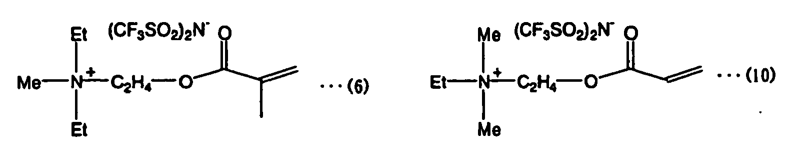

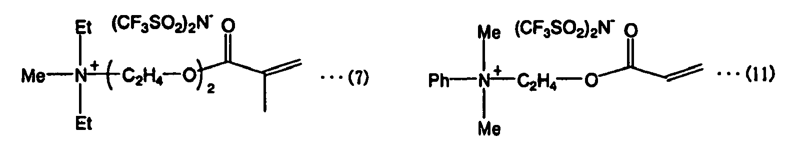

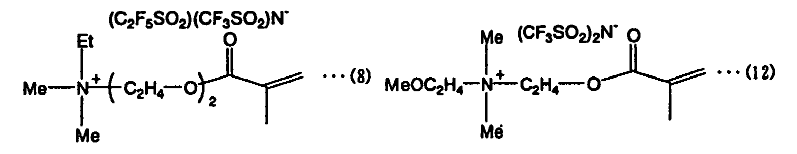

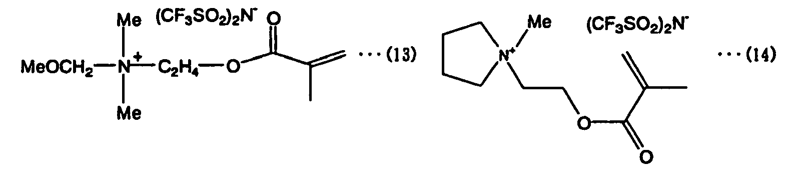

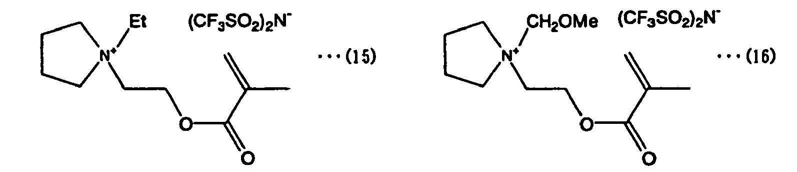

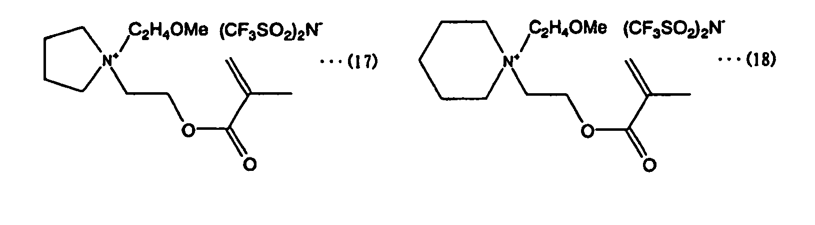

The content of the polymerizable group-bearing ionic liquid in the solvent-less liquid composition of the invention is not subject to any particular limitation, although to confer the solvent-less liquid composition with a suitable viscosity and to make it easier to carry out work such as applying the composition, the content is preferably from 30 to 90 wt%, and more preferably from 50 to 80 wt%.

The invention is characterized by the use of the polymerizable group-bearing ionic liquid as a reactive diluent in the solvent-less liquid composition. No particular limitation is imposed on the reactive group-bearing low-molecular-weight organic compound and the polymeric compound which are included in the solvent-less liquid composition. Specific examples of these compounds include any of the various compounds commonly used as base compounds or curing agents in the field of adhesives and coatings.
Illustrative examples of the reactive group-bearing low-molecular-weight organic compound include compounds having at least one group selected from among α,β-unsaturated carbonyl groups, α,β-unsaturated nitrile groups, conjugated dienes, vinyl carboxylate groups, carboxyl groups, carbonyl groups, epoxy groups, isocyanate groups, hydroxyl groups, amide groups, cyano groups, amino groups, chloromethyl groups, glycidyl ether groups, ester groups, formyl groups, nitrile groups, nitro groups, carbodiimide groups, oxazoline groups, carbon-carbon double bond-containing groups, and carbon-carbon triple bond-containing groups.

Specific examples of the low-molecular-weight organic compound include (meth)acrylic acid-type low-molecular-weight compounds such as (meth)acrylic acid, 2-ethylhexyl (meth)acrylate, 2-hydroxyethyl acrylate and methyl (meth)acrylate; nitrile-type low-molecular-weight compounds such as acrylonitrile, methacrylonitrile, ethacrylonitrile, maleonitrile and fumaronitrile; amide-type low-molecular-weight compounds such as (meth)acrylamide, N-methyl (meth)acrylamide and methylol acrylamide; isocyanate-type low-molecular-weight compounds such as toluene diisocyanate and hexamethylene diisocyanate; carbon-carbon double bond-containing low-molecular-weight compounds such as styrene, butadiene, vinyl chloride and vinyl acetate; and carbon-carbon triple bond-containing low-molecular-weight compounds such as 1-butyn-1-ol and 1,6-heptadiyne.

The polymeric compound may be at least one selected from among fluorocarbon resins, acrylic resins, polyester resins, epoxy resins, melamine resins, silicone resins and polyurethane resins.
Examples of fluorocarbon resins include bipolymers of a fluorinated vinyl monomer with a functional group-bearing vinyl monomer, and terpolymers of a fluorinated vinyl monomer, a functional group-bearing vinyl monomer and another copolymerizable vinyl monomer.
Exemplary fluorinated vinyl monomers include vinyl fluoride, vinylidene fluoride, trifluoroethylene, tetrafluoroethylene, bromotrifluoroethylene, chlorotrifluoroethylene, pentafluoropropylene, hexafluoropropylene and (per)fluoroalkyl trifluorovinyl ethers.

Exemplary functional group-bearing vinyl monomers include hydroxyl group-bearing vinyl monomers such as hydroxyalkyl vinyl ethers (e.g., hydroxyethyl vinyl ether, hydroxypropyl vinyl ether, hydroxybutyl vinyl ether) and hydroxyalkyl (meth)acrylates (e.g., 2-hydroxyethyl (meth)acrylate, 2-hydroxypropyl acrylate and diethylene glycol mono(meth)acrylate); carboxyl group-bearing vinyl monomers such as acrylic acid, methacrylic acid, maleic acid, maleic anhydride, itaconic acid, itaconic anhydride and fumaric acid; and amino group-bearing vinyl monomers such as dimethylaminoethyl vinyl ether, dimethylaminopropyl vinyl ether, N,N-dimethylaminopropyl (meth)acrylamide and dimethylaminoethyl (meth)acrylate.

Examples of other copolymerizable vinyl monomers include alkyl vinyl ethers, vinyl esters of aliphatic carboxylic acids, vinyl esters of aromatic carboxylic acids, epoxy group-bearing vinyl monomers, carboxyl group-bearing vinyl monomers, halogenated vinyl monomers, aromatic vinyl monomers and (meth)acrylic acid derivatives.
The above fluorinated vinyl monomer, functional group-bearing vinyl monomer and copolymerizable vinyl monomer may each be used singly or as combinations of two or more thereof.

Exemplary acrylic resins include polymers obtained by polymerizing or copolymerizing acrylic and methacrylic monomers, and polymers obtained by copolymerizing an acrylic or methacrylic monomer with a monomer copolymerizable therewith.
Examples of acrylic and methacrylic monomers include acrylic acid, methacrylic acid, methyl (meth)acrylate, ethyl (meth)acrylate, n-propyl (meth)acrylate, i-propyl (meth)acrylate, t-butyl (meth)acrylate, n-hexyl (meth)acrylate, n-octyl (meth)acrylate, 2-ethylhexyl (meth)acrylate, lauryl (meth)acrylate, stearyl (meth)acrylate, 2-hydroxyethyl (meth)acrylate and 2-hydroxypropyl (meth)acrylate; and (meth)acrylamides such as (meth)acrylamide, N-methylolacrylamide, N-butoxymethyl acrylamide and diacetone acrylamide. Alternatively, use can be made of (meth)acrylic acid monoesters or (meth)acrylic acid diesters having alkylene oxide repeating units, such as methoxydiethylene glycol (meth)acrylate, methoxynonaethylene glycol (meth)acrylate, NK Ester 2G (Shin-Nakamura Chemical Co., Ltd.), NK Ester 9G (Shin-Nakamura Chemical) and NK Ester 23G (Shin-Nakamura Chemical); and other polyfunctional (meth)acrylic acid derivatives having a plurality of (meth)acryl groups on the molecule, such as NK Ester TMPT (Shin-Nakamura Chemical).
No particular limitation is imposed on the copolymerizable monomer, so long as it is a monomer having a functional group which is copolymerizable with the acrylic or methacrylic monomer. Illustrative examples include (meth)acrylonitrile, vinyl chloride, vinylidene chloride, vinyl acetate, dimethyl itaconate, diethyl maleate, ethyl vinyl ether, styrene, vinyltoluene, α-methylstyrene, vinylpyridine, divinylbenzene and divinyl adipate.

Exemplary polyester resins include resins obtained by the condensation, using a conventional technique and under surplus hydroxyl group conditions, of a polybasic acid such as phthalic acid, isophthalic acid, terephthalic acid, maleic acid, fumaric acid, succinic acid, adipic acid, sebacic acid, azelaic acid or trimellitic acid with a polyol such as ethylene glycol, diethylene glycol, propylene glycol, dipropylene glycol, 1,3-butanediol, 1,4-butanediol, 1,5-pentanediol, neopentyl glycol, hexamethylene glycol, decamethylene glycol, hydroquinone bis(hydroxyethyl ether), 2,2,4-trimethyl-1,3-pentanediol, hydrogenated bisphenol A, trimethylolethane, trimethylolpropane, hexanetriol, glycerol, pentaerythritol, tris(hydroxyethyl) isocyanurate, cyclohexanediol, cyclohexanedimethanol and xylylene glycol.

Exemplary melamine resins include resins obtained by reacting melamine with formalin to form an initial condensate of methylolated melamine, then modifying the initial condensate with butanol or the like. Such a resin that is soluble in an organic solvent is preferred.
Exemplary epoxy resins include bisphenol A-type epoxy resins, brominated bisphenol A-type epoxy resins, and other polyphenol-, polyglycidylamine-, alcohol- and ester-type resins.

Exemplary silicone resins include vinyl silicone resins and phenyl vinyl silicone resins composed of, as the base resin, a polysiloxane prepared by silanol polycondensation involving the hydrolysis of dimethyldichlorosilane or methylphenyldichlorosilane, wherein some of the dimethylsiloxane or methylphenylsiloxane units are substituted with vinyl groups.
Exemplary polyurethane resins include polyurethane resins obtained by the addition polymerization of at least one isocyanate, such as 2,4-tolylene diisocyanate, 2,4-tolylene diisocyanate or hexamethylene diisocyanate, with at least one glycol, such as ethylene oxide, propylene oxide, propylene glycol or 1,4-butanediol.

Although the above-described polymeric compound may or may not have a reactive group, given the need to ultimately polymerize the polymerizable group-bearing ionic liquid used as the reactive diluent in the solvent-less liquid composition of the invention, it is preferable for a polymeric compound having a reactive group to be used.
Examples include reactive group-bearing fluorocarbon resins, acrylic resins, polyester resins, epoxy resins, melamine resins, silicone resins and polyurethane resins.

As noted above, the solvent-less liquid composition of the invention is composed of any of various reactive group-bearing low-molecular-weight organic compounds and/or polymeric compounds, together with a reactive diluent made up of a polymerizable group-bearing ionic liquid. Within the composition, the relative proportions of the reactive group-bearing low-molecular-weight organic compound and/or polymeric compound and the polymerizable group-bearing ionic liquid, expressed as a weight ratio, is typically from 70:30 to 1:99, preferably from 60:40 to 10:90, and more preferably from 50:50 to 20:80.
In the solvent-less liquid composition of the invention, aside from the reactive group-bearing low-molecular-weight compound, the polymeric compound and the reactive diluent, optional ingredients suitable for adhesives, coatings and the like may also be included if necessary.
Specific examples of such optional components include foam inhibitors, antioxidants, ultraviolet absorbers, plasticizers, surfactants, dyes, pigments, and organic or inorganic fine particles.

Any suitable method may be used to prepare the solvent-less liquid composition of the invention. For example, preparation may involve mixing together the reactive group-bearing low-molecular-weight organic compound and/or polymer compound, the reactive diluent composed of a polymerizable group-bearing ionic liquid, and any optional ingredients in a suitable order, then subjecting the mixture to agitation.
As used herein, the adjectival term 'liquid' refers to such physical forms as those of, for example, a uniform solution, an emulsion and a suspension.

The solvent-less liquid composition of the invention is highly suitable as an adhesive composition or as a coating composition.
Illustrative, non-limiting, examples of adhesives include epoxy resin adhesives (e.g., epoxy-phenolic, epoxy-polyamide, epoxy-nitrile rubber and epoxy-vulcanized acrylic rubber adhesives), phenolic resin adhesives (e.g., nitrile-phenolic and vinyl-phenolic adhesives), acrylic resin adhesives, urethane resin adhesives, silicone adhesives and rubber adhesives. The required adhesive composition can be prepared by suitably selecting the reactive group-bearing low-molecular-weight organic compound and polymeric compound to be included in the solvent-less liquid composition.
The solvent-less liquid composition of the invention may also be employed in functional adhesives such as UV-curable adhesives, visible light-curable adhesives, elastic adhesives, heat-resistant adhesives, pressure-sensitive adhesives and electrically conductive adhesives.

Illustrative, non-limiting, examples of coatings include nitrocellulose, alkyd resin, aminoalkyd resin, vinyl resin, acrylic resin, epoxy resin, urethane resin, polyester resin, chlorinated rubber, silicone resin, and fluorocarbon resin-based coatings. Here too, the required coating composition can be prepared by suitably selecting the reactive group-bearing low-molecular-weight organic compound and polymeric compound to be included in the solvent-less liquid composition.

When the solvent-less liquid composition of the invention is used as an adhesive composition, bonding may be carried out by, for example, applying the solvent-less liquid composition prepared by a suitable technique as described above to the bonding surface of one adherend, stacking or fixing the other adherend thereon, then curing by a suitable method such as heating, ultraviolet irradiation or electron beam irradiation, according to the type of reactive groups in the solvent-less liquid composition.
When the solvent-less liquid composition of the invention is used as a coating composition, coating film formation may be carried out by, for example, using a suitable technique to apply the solvent-less liquid composition to the surface to be coated, then, as with the adhesive composition, curing by a curing method suitable for the type of reactive groups in the composition.

The polymerizable group-bearing ionic liquid of the invention has a cation and an anion within the molecules thereof, and thus is also suitable for use as an antistatic agent.
When the polymerizable group-bearing ionic liquid is used as an antistatic agent, it may be used by addition to a liquid composition, regardless of whether the composition is solvent-based or solvent-less, it may be used by addition to a composition for obtaining molded plastic articles, or it may be kneaded into a resin. The amount of the antistatic agent included in these respective compositions, while not subject to any particular limitation, is generally in a range of about 0.01 to about 30 wt% of the overall composition.

Alternatively, an antistatic agent composed of the above-described polymerizable group-bearing ionic liquid may be polymerized alone to form an antistatic film (sheet), or an antistatic agent composed of the polymerizable group-bearing ionic liquid may be applied to an object to be coated, such as a molded plastic article, then polymerized alone to form an antistatic film. The polymerization conditions may, as described above, involve the use of a method suitable for the polymerizable groups, such as heating, ultraviolet irradiation or electron beam irradiation.
Here too, because the polymerizable group-bearing ionic liquid remains within the film or coat due to the polymerization reaction, adverse effects on human health and the environment due to the release of solvent vapor can be minimized. Moreover, following polymerization, there is no need for a drying step to remove solvent.

Also, when the polymerizable group-bearing ionic liquid is used as an antistatic agent, although the polymerizable group-bearing ionic liquid may be used alone, it is also possible to add optional ingredients such as foam inhibitors, antioxidants, ultraviolet absorbers, plasticizers, surfactants, dyes, pigments, and organic or inorganic fine particles to the polymerizable group-bearing ionic liquid.

### EXAMPLES

Examples are given below by way of illustration and not by way of limitation.

### Synthesis Example 1 Synthesis of Polymerizable Group-Bearing Ionic Liquid (6)

A solution was prepared by dissolving 11.7 g of N,N-diethylaminoethyl methacrylate (Wako Pure Chemical Industries, Ltd.) in 250 ml of tetrahydrofuran (Wako Pure Chemical Industries), then stirred with a stirrer under ice cooling while slowly adding 4.71 ml of iodomethane (Sigma-Aldrich Japan KK). After 30 minutes, the ice bath was removed and stirring was continued overnight at room temperature. The solvent in this reaction solution was driven off by vacuum distillation, and the resulting solids were recrystallized from an ethanol (Wako Pure Chemical Industries) - tetrahydrofuran mixture, yielding 18.17 g of N,N-diethyl-N-methyl-N-(2-methacryloylethyl)ammonium iodide.
Next, the 18.17 g of the N,N-diethyl-N-methyl-N-(2-methacryloylethyl)ammonium iodide was dissolved in 50 ml of acetonitrile (Kanto Chemical Co., Inc.), following which 15.93 g of lithium bis(trifluoromethanesulfonyl)imide (Kanto Chemical) was added and completely dissolved therein, and the resulting solution was stirred for 30 minutes. The acetonitrile was then driven off by vacuum distillation, following which a suitable amount of ion-exchanged water was added to the residue and washing was carried out, thereby removing impurities from the organic phase. After washing, residual moisture was removed from the organic phase with a vacuum pump, yielding 20.71 g of a polymerizable group-bearing ionic liquid (6).

### Synthesis Example 2 Synthesis of Polymerizable Group-Bearing Ionic Liquid (9)

A solution was prepared by dissolving 10.0 g of N-(2-acryloylethyl)-N,N,N-trimethylammonium chloride (Kohjin Co., Ltd.), prepared as a 79 wt% aqueous solution, in 50 ml of ion-exchanged water. Next, 11.72 g of lithium bis(trifluoromethanesulfonyl)imide (Kanto Chemical) was added and the mixture was stirred for 60 minutes. Of the two distinct phases that formed, the organic phase was separated off and collected.
A suitable amount of ion-exchanged water was added to the organic phase and washing was carried out, thereby removing impurities from the organic phase. After washing, residual moisture was removed from the organic phase with a vacuum pump, yielding 16.27 g of a polymerizable group-bearing ionic liquid (9).

### Synthesis Example 3 Synthesis of Polymerizable Group-Bearing Ionic Liquid (10)

A solution was prepared by dissolving 7.15 g of N,N-dimethylaminoethyl acrylate (Kohjin Co., Ltd.) in 50 ml of tetrahydrofuran (Wako Pure Chemical Industries), then stirred with a stirrer under ice cooling while slowly adding 7.80 ml of iodoethane (Wako Pure Chemical Industries). After 30 minutes, the ice bath was removed and stirring was continued overnight at room temperature. The solvent in this reaction solution was driven off by vacuum distillation, and the resulting solids were recrystallized from an ethanol-tetrahydrofuran mixture, giving 12.23 g of N-(2-acryloylethyl)-N-ethyl-N,N-dimethylammonium iodide.
Next, the 12.23 g of N-(2-acryloylethyl)-N-ethyl-N,N-dimethylammonium iodide was dissolved in 50 ml of ion-exchanged water, following which 11.74 g of lithium bis(trifluoromethanesulfonyl)imide was added and the mixture was stirred for 60 minutes. Of the two distinct phases that formed, the organic phase was separated off and collected.
A suitable amount of ion-exchanged water was added to the organic phase and washing was carried out, thereby removing impurities from the organic phase. After washing, residual moisture was removed from the organic phase with a vacuum pump, yielding 13.28 g of a polymerizable group-bearing ionic liquid (10).

### Synthesis Example 4 Synthesis of Polymerizable Group-Bearing Ionic Liquid (11)

A solution was prepared by dissolving 10.0 g of N-(2-acryloylethyl)-N,N-dimethyl-N-phenylammonium chloride, prepared as a 75 wt% aqueous solution, in 50 ml of ion-exchanged water. Next, 11.24 g of lithium bis(trifluoromethanesulfonyl)imide (Kanto Chemical) was added and the mixture was stirred for 60 minutes. Of the two distinct phases that formed, the organic phase was separated off and collected.
A suitable amount of ion-exchanged water was added to the organic phase and washing was carried out, thereby removing impurities from the organic phase. After washing, residual moisture was removed from the organic phase with a vacuum pump, yielding 13.28 g of a polymerizable group-bearing ionic liquid (11).

### Synthesis Example 5 Synthesis of Polymerizable Group-Bearing Ionic Liquid (12)

After reacting 27 g of 2-(N-methylamino)ethanol (Kanto Chemical) and 25 g of methoxyethyl bromide (Manak Incorporated) in an autoclave at 70°C for 1 hour, the reaction mixture was filtered, then subjected to vacuum distillation. The resulting fractions were separated using a silica gel column, yielding 12.05 g of 2-[N-methyl-N-(2-methoxyethyl)amino]ethanol.
Next, the 12.05 g of 2-[N-methyl-N-(2-methoxyethyl)-amino]ethanol was dissolved in 100 ml of tetrahydrofuran (Wako Pure Chemical Industries), then stirred with a stirrer under ice cooling while slowly adding 9.62 g of triethylamine (Kanto Chemical) and 9.93 g of methacryloyl chloride (Wako Pure Chemical Industries). Stirring was continued overnight at room temperature. The reaction mixture was extracted with tetrahydrofuran, dried over potassium carbonate (Wako Pure Chemical Industries), then filtered. The filtrate was separated using a silica gel column, yielding 5.14 g of N-methyl-N-(2-methoxyethyl)aminoethyl methacrylate.
Next, 75 ml of tetrahydrofuran was added to the 5.14 g of N-methyl-N-(2-methoxyethyl)aminoethyl methacrylate, stirring was carried out with a stirrer, and 4.35 g of iodomethane (Sigma-Aldrich Japan) was slowly added. Stirring was continued overnight at room temperature. The solvent in the reaction mixture was driven off by vacuum distillation, and the resulting solids were recrystallized from an ethanol-tetrahydrofuran-hexane mixture, yielding 6.84 g of N,N-dimethyl-N-(2-methoxyethyl)-N-(methacryloylethyl)ammonium iodide.
Next, the 6.84 g of N,N-dimethyl-N-(2-methoxyethyl)-N-(methacryloylethyl)ammonium iodide was dissolved in 50 ml of ion-exchanged water, following which 5.72 g of lithium bis(trifluoromethanesulfonyl)imide was added under stirring with a stirrer. Stirring was continued overnight at room temperature. Of the two distinct phases that formed, the organic phase was separated off and collected.
A suitable amount of ion-exchanged water was added to the organic phase and washing was carried out, thereby removing impurities from the organic phase. After washing, residual moisture was removed from the organic phase with a vacuum pump, yielding 5.20 g of a polymerizable group-bearing ionic liquid (12).

### (1) Adhesive Compositions

### Examples 1 to 11

Liquid UV-curable adhesive compositions were prepared by mixing the polymerizable group-bearing ionic liquid (6) prepared in Synthesis Example 1 (Examples 1, 2 and 6), the polymerizable group-bearing ionic liquid (9) prepared in Synthesis Example 2 (Examples 3 to 6), the polymerizable group-bearing ionic liquid (10) prepared in Synthesis Example 3 (Examples 7 and 8), the polymerizable group-bearing ionic liquid (11) prepared in Synthesis Example 4 (Examples 9 and 10), the polymerizable group-bearing ionic liquid (12) prepared in Synthesis Example 5 (Example 11), 2-hydroxyethyl methacrylate (abbreviated below as "2-HEMA"; available from Mitsubishi Gas Chemical Company Inc.), trimethylolpropane trimethacrylate (abbreviated below as "TMPT"; Shin-Nakamura Chemical), and the photopolymerization initiator 2,2'-dimethoxyphenyl acetone (Tokyo Chemical Industry Co., Ltd.) in the proportions shown in Table 1. In Example 6, polymerizable group-bearing ionic liquid (6) and polymerizable group-bearing ionic liquid (9) were mixed and used together in the proportions shown in Table 1.

**Table 1**

| | Composition (parts by weight) | | | | | | | |
|---|---|---|---|---|---|---|---|---|
| | Polymerizable group-bearing ionic liquid | | | | | 2-HEMA | TMPT | Photopolymerization initiator |
| | (6) | (9) | (10) | (11) | (12) | | | |
| Example 1 | 50 | | | | | 50 | 3 | 0.5 |
| Example 2 | 65 | | | | | 35 | 3 | 0.5 |
| Example 3 | | 50 | | | | 50 | 3 | 0.5 |
| Example 4 | | 65 | | | | 35 | 3 | 0.5 |
| Example 5 | | 35 | | | | 65 | 3 | 0.5 |
| Example 6 | 20 | 45 | | | | 35 | 3 | 0.5 |
| Example 7 | | | 50 | | | 50 | 3 | 0.5 |
| Example 8 | | | 65 | | | 35 | 3 | 0.5 |
| Example 9 | | | | 50 | | 50 | 3 | 0.5 |
| Example 10 | | | | 65 | | 35 | 3 | 0.5 |
| Example 11 | | | | | 50 | 50 | 3 | 0.5 |

The following method was used to test the adhesive properties of the adhesive compositions obtained in the above examples. The results are shown in Table 2.

### Adhesion Test

The respective adhesive compositions obtained in Examples 1 to 11 were applied in an amount of 5.0x10⁻³ g/cm² to a piece of polyethylene terephthalate film measuring 3.0 cm by 4.0 cm, following which another piece of polyethylene terephthalate film of the same size was placed on top of the adhesive composition. Irradiation with ultraviolet light (160 W/cm²) was then carried out for 10 seconds to effect curing, thereby bonding together both films.
The two bonded films were peeled apart, and the adhesion were rated according on the following criteria.
Good: The films failed during peeling

**Table 2**

| | Adhesion |
|---|---|
| Example 1 | good |
| Example 2 | good |
| Example 3 | good |
| Example 4 | good |
| Example 5 | good |
| Example 6 | good |
| Example 7 | good |
| Example 8 | good |
| Example 9 | good |
| Example 10 | good |
| Example 11 | good |

### (2) Coating Compositions

### Example 12

A liquid UV-curable coating composition was prepared by mixing together 80 parts by weight of polymerizable group-bearing ionic liquid (6), 20 parts by weight of 2-hydroxyethyl methacrylate (Mitsubishi Gas Chemical), 2 parts by weight of Macrolex Blue 3R Gran (Bayer Yakuhin, Ltd.), and 0.5 part by weight of the photopolymerization initiator 2,2'-dimethoxyphenyl acetone. The resulting coating composition was applied with a bar coater to a thickness of 5.0 µm onto a solvent-washed 100 µm thick polyethylene terephthalate film, and irradiated with ultraviolet light (160 W/cm²) for 10 seconds to effect curing, thereby forming a cured coat.

### Example 13

Aside from using polymerizable group-bearing ionic liquid (9), a UV-curable coating composition was prepared in the same way as in Example 12. The resulting coating composition was used to form a cured coat in the same way as in Example 12.

### Example 14

A liquid UV-curable coating composition was prepared by mixing together 100 parts by weight of polymerizable group-bearing ionic liquid (9), 1 part by weight of Macrolex Blue 3R Gran, and 0.5 part by weight of the photopolymerization initiator 2,2'-dimethoxyphenyl acetone. The resulting coating composition was used to form a cured coat in the same way as in Example 12.
The pencil hardness, adhesion and surface resistivity of the coats formed in Examples 12 to 14 were measured as follows. The results are given in Table 3.

### Evaluation of Physical Properties of Coat

### (1) Pencil Hardness Test

The pencil hardness was measured by a method in accordance with JIS K 5600.

### (2) Adhesion Test

In accordance with JIS K 5600, the applied coat was scored at vertical and horizontal intervals of 1 mm to create a checkerboard pattern of 36 boxes, then a crosscut peel test was carried out using pressure-sensitive tape, based on which the adhesion was evaluated. In Table 4, the denominator indicates the number of boxes out of the 36 boxes in the checkerboard pattern that did not peel off, and the numerator indicates the number of boxes that did peel off.

### (3) Surface Resistivity

The surface resistivity was measured by a method in accordance with JIS K 6911.

**Table 3**

| | Pencil hardness | Adhesion | Surface resistivity (Ω) |
|---|---|---|---|
| Example 12 | 6H | 0/36 | 8.6×10¹⁰ |
| Example 13 | 5H | 0/36 | 6.1×10¹⁰ |
| Example 14 | 5H | 0/36 | 7.2×10⁹ |

### Example 15

Polymerizable group-bearing ionic liquid (9) was applied with a bar coater to a thickness of 5.0 µm onto a solvent-washed 100 µm thick polyethylene terephthalate film, and cured by 15 minutes of irradiation with ultraviolet light (160 W/cm²).
The pencil hardness, adhesion and surface resistivity of the resulting film were measured in the same way as in Example 12. The pencil hardness was 4H, the adhesion was 0/36, and the surface resistivity was 3.2×10⁹ Ω.

## Claims

1. A solvent-less liquid composition consisting of: (i) at least one reactive group-bearing low-molecular-weight organic compound other than a polymerizable group-bearing ionic liquid and/or at least one polymeric compound, and (ii) a reactive diluent consisting of at least one polymerizable group-bearing ionic liquid which has general formula (1) below 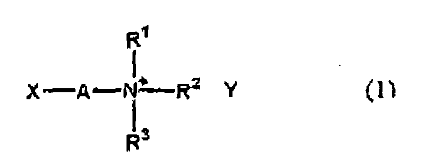 wherein X is a polymerizable functional group; A is a straight-chain or branched-chain hydrocarbon group of 1 to 15 carbons which may include an alkylene oxide unit; R¹ to R³ are each independently an alkyl, alkoxy, aryl or polymerizable group-bearing alkyl of 1 to 10 carbons, and any two moieties from among R¹ to R³ may together form a ring; and Y is a monovalent anion.

2. The solvent-less liquid composition of claim 1 wherein A is a straight-chain hydrocarbon group of 1 to 4 carbons which may include an ethylene oxide unit.

3. The solvent-less liquid composition of claim 1 or claim 2 which is an adhesive composition or a coating composition.

4. The use as a reactive diluent of a polymerizable group-bearing ionic liquid of general formula (1): 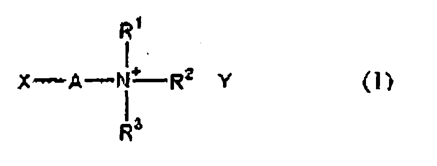 wherein X is a polymerizable functional group; A is a straight-chain or branched-chain hydrocarbon group of 1 to 15 carbons which may include an alkylene oxide unit; R¹ to R³ are each independently an alkyl, alkoxy, aryl or polymerizable group-bearing alkyl of 1 to 10 carbons, and any two moieties from among R¹ to R³ may together form a ring; and Y is a monovalent anion.

5. The use of claim 4 wherein A is a straight-chain hydrocarbon group of 1 to 4 carbons which may include an ethylene oxide unit.

6. Use as a solventless adhesive, solventless coating composition, or antistatic agent of a composition comprising a polymerizable group-bearing ionic liquid which has general formula (1): 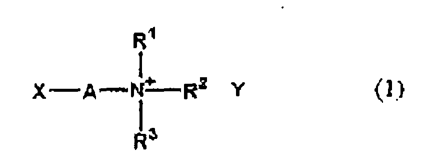 wherein X is a polyermizable functional group; A is a straight-chain or branched-chain hydrocarbon group of 1 to 15 carbons which may include an alkylene oxide unit; R¹ to R³ are each independently an alkyl, alkoxy, aryl or polymerizable group-bearing alkyl of 1 to 10 carbons, and any two moieties from among R¹ to R³ may together form a ring; and Y is a monovalent anion.

7. Use according to claim 6 wherein A is a straight-chain hydrocarbon group of 1 to 4 carbons which may include an ethylene oxide unit.

8. The use according to claim 6 or claim 7, which is use as an antistatic agent.

## Patentansprüche

1. Lösungsmittelfreie flüssige Zusammensetzung, die aus Folgendem besteht: (i) zumindest einer eine reaktive Gruppe aufweisenden, niedermolekularen organischen Verbindung, die keine eine polymerisierbare Gruppe aufweisende ionische Flüssigkeit ist, und/oder zumindest eine Polymerverbindung; und (ii) einen Reaktivverdünner, der aus zumindest einer eine polymerisierbare Gruppe aufweisenden ionischen Flüssigkeit der nachstehenden allgemeinen Formel (1) besteht: 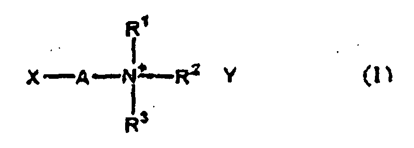 worin X eine polymerisierbare funktionelle Gruppe ist; A eine unverzweigte oder verzweigte Kohlenwasserstoffgruppe mit 1 bis 15 Kohlenstoffatomen ist, die gegebenenfalls eine Alkylenoxideinheit umfasst; R¹ bis R³ jeweils unabhängig voneinander ein Alkyl, Alkoxy, Aryl oder ein eine polymerisierbare Gruppe aufweisendes Alkyl mit 1 bis 10 Kohlenstoffatomen sind und beliebige zwei aus R¹ bis R³ ausgewählte Gruppierungen gegebenenfalls gemeinsam einen Ring bilden; und Y ein einwertiges Anion ist.

2. Lösungsmittelfreie flüssige Zusammensetzung nach Anspruch 1, worin A eine unverzweigte Kohlenwasserstoffgruppe mit 1 bis 4 Kohlenstoffatomen ist, die gegebenenfalls eine Ethylenoxideinheit umfasst.

3. Lösungsmittelfreie flüssige Zusammensetzung nach Anspruch 1 oder 2, die eine Haftmittelzusammensetzung oder eine Beschichtungszusammensetzung ist.

4. Verwendung einer eine polymerisierbare Gruppe aufweisenden ionischen Flüssigkeit der allgemeinen Formel (1): 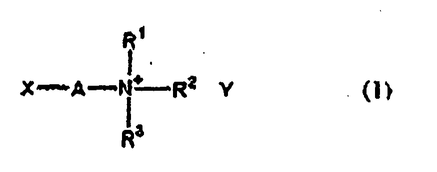 worin X eine polymerisierbare funktionelle Gruppe ist; A eine unverzweigte oder verzweigte Kohlenwasserstoffgruppe mit 1 bis 15 Kohlenstoffatomen ist, die gegebenenfalls eine Alkylenoxideinheit umfasst; R¹ bis R³ jeweils unabhängig voneinander ein Alkyl, Alkoxy, Aryl oder ein eine polymerisierbare Gruppe aufweisendes Alkyl mit 1 bis 10 Kohlenstoffatomen sind und beliebige zwei aus R¹ bis R³ ausgewählte Gruppierungen gegebenenfalls gemeinsam einen Ring bilden; und Y ein einwertiges Anion ist, als Reaktivverdünner.

5. Verwendung nach Anspruch 4, worin A eine unverzweigte Kohlenwasserstoffgruppe mit 1 bis 4 Kohlenstoffatomen ist, die gegebenenfalls eine Ethylenoxideinheit umfasst.

6. Verwendung einer Zusammensetzung, die eine eine polymerisierbare Gruppe aufweisende ionische Flüssigkeit der allgemeinen Formel (1) umfasst, 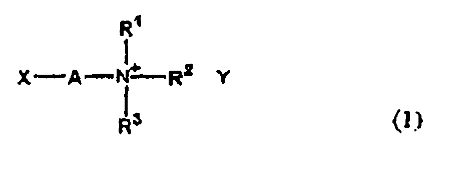 worin X eine polymerisierbare funktionelle Gruppe ist; A eine unverzweigte oder verzweigte Kohlenwasserstoffgruppe mit 1 bis 15 Kohlenstoffatomen ist, die gegebenenfalls eine Alkylenoxideinheit umfasst; R¹ bis R³ jeweils unabhängig voneinander ein Alkyl, Alkoxy, Aryl oder ein eine polymerisierbare Gruppe aufweisendes Alkyl mit 1 bis 10 Kohlenstoffatomen sind und beliebige zwei aus R¹ bis R³ ausgewählte Gruppierungen gegebenenfalls gemeinsam einen Ring bilden; und Y ein einwertiges Anion ist,
als lösungsmittelfreies Haftmittel, lösungsmittelfreie Beschichtungszusammensetzung oder Antistatikmittel.

7. Verwendung nach Anspruch 6, worin A eine unverzweigte Kohlenwasserstoffgruppe mit 1 bis 4 Kohlenstoffatomen ist, die gegebenenfalls eine Ethylenoxideinheit umfasst.

8. Verwendung nach Anspruch 6 oder 7, wobei es sich um eine Verwendung als Antistatikmittel handelt.

## Revendications

1. Composition liquide sans solvant constituée: (i) d'au moins un composé organique de faible masse moléculaire portant un groupe réactif autre qu'un liquide ionique portant un groupe polymérisable et/ou au moins un composé polymère, et (ii) un diluant réactif constitué d'au moins un liquide ionique portant un groupe polymérisable qui répond à la formule générale (1) ci-dessous 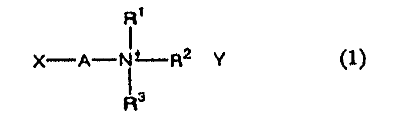 dans laquelle X est un groupe fonctionnel polymérisable; A est un groupe hydrocarboné à chaîne droite ou à chaîne ramifiée de 1 à 15 atomes de carbone qui peut comprendre un motif oxyde d'alkylène; R¹ à R³ sont chacun indépendamment un groupe alkyle, alcoxy, aryle ou alkyle portant un groupe polymérisable de 1 à 10 atomes de carbone, et deux fractions quelconques parmi R¹ à R³ peuvent former ensemble un cycle; et Y est un anion monovalent.

2. Composition liquide sans solvant selon la revendication 1, dans laquelle A est un groupe hydrocarboné à chaîne droite de 1 à 4 atomes de carbone qui peut comprendre un motif oxyde d'éthylène.

3. Composition liquide sans solvant selon la revendication 1 ou la revendication 2, qui est une composition adhésive ou une composition de revêtement.

4. Utilisation comme diluant réactif d'un liquide ionique portant un groupe polymérisable de formule générale (1): 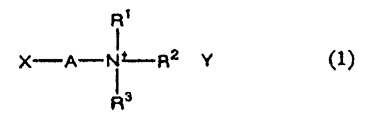 dans laquelle X est un groupe fonctionnel polymérisable; A est un groupe hydrocarboné à chaîne droite ou à chaîne ramifiée de 1 à 15 atomes de carbone qui peut comprendre un motif oxyde d'alkylène; R¹ à R³ sont chacun indépendamment un groupe alkyle, alcoxy, aryle ou alkyle portant un groupe polymérisable de 1 à 10 atomes de carbone, et deux fractions quelconques parmi R¹ à R³ peuvent former ensemble un cycle; et Y est un anion monovalent.

5. Utilisation selon la revendication 4, dans laquelle A est un groupe hydrocarboné à chaîne droite de l'à 4 atomes de carbone qui peut comprendre un motif oxyde d'éthylène.

6. Utilisation d'un adhésif sans solvant, d'une composition de revêtement sans solvant ou d'un agent antistatique d'une composition comprenant un liquide ionique portant un groupe polymérisable qui répond à la formule générale (1): 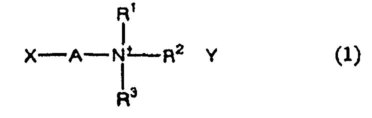 dans laquelle X est un groupe fonctionnel polymérisable; A est un groupe hydrocarboné à chaîne droite ou à chaîne ramifiée de 1 à 15 atomes de carbone qui peut comprendre un motif oxyde d'alkylène; R¹ à R³ sont chacun indépendamment un groupe alkyle, alcoxy, aryle ou alkyle portant un groupe polymérisable de 1 à 10 atomes de carbone, et deux fractions quelconques parmi R¹ à R³ peuvent former ensemble un cycle; et Y est un anion monovalent.

7. Utilisation selon la revendication 6, dans laquelle A est un groupe hydrocarboné à chaîne droite de 1 à 4 atomes de carbone qui peut comprendre un motif oxyde d'éthylène.

8. Utilisation selon la revendication 6 ou la revendication 7, qui est une utilisation comme agent antistatique.
